# EUROPÄISCHE PATENTSCHRIFT

(11) **EP 2 649 767 B1**
(45) Veröffentlichungstag und Bekanntmachung des Hinweises auf die Patenterteilung: **25.07.2018**
(21) Anmeldenummer: 11793340.8
(22) Anmeldetag: 07.12.2011
(51) Int. Cl.: H04L 29/06, H04W 12/06, G06Q 10/10, G06F 21/00, H04W 8/24, H04L 12/58, G06F 21/60, H04L 9/00, H04W 4/12

(54) **VERFAHREN ZUM VERSCHLÜSSELN EINER ELEKTRONISCHEN TEXTNACHRICHT**
METHOD FOR ENCRYPTING AN ELECTRONIC TEXT MESSAGE
PROCÉDÉ POUR CODER UN MESSAGE TEXTUEL ÉLECTRONIQUE

(30) Priorität: 10.12.2010 DE 102010054059
(43) Veröffentlichungstag der Anmeldung: 16.10.2013
(73) Patentinhaber: Giesecke+Devrient Mobile Security GmbH, 81677 München (DE)
(72) Erfinder: ANGERMEIER, Stefan, 81735 München (DE); SCHUSTER, Helmut, 87660 Irsee (DE)
(86) Internationale Anmeldenummer: PCT/EP2011/006152
(87) Internationale Veröffentlichungsnummer: WO 2012/076172

(56) Entgegenhaltungen:
- EP-A1- 1 289 326
- EP-A2- 1 471 453
- US-A1- 2004 133 520
- US-A1- 2007 260 874
- US-A1- 2009 300 346
- Lazaros Kyrillidis ET AL: "Web Server on a SIM Card", Proceedings of the World Congress on Engineering 2010 Vol I WCE 2010, 1. Juli 2010 (2010-07-01), XP55019500, London, U.K. Gefunden im Internet: URL:http://www.iaeng.org/publication/WCE20 10/WCE2010_pp253-259.pdf [gefunden am 2012-02-15]

## Beschreibung

Die Erfindung betrifft ein Verfahren zum kryptografischen Verschlüsseln einer elektronischen Textnachricht, insbesondere einer E-Mail, in einem Sicherheitselement eines mobilen Endgeräts bzw. in einer Mobilfunkzertifikatinstanz, wobei die Textnachricht über ein Mobilfunknetz an eine entfernte Empfängerinstanz nach der Verschlüsselung gesendet wird bzw. nach einer entsprechenden Entschlüsselung an das mobile Endgerät gesendet wird.

Für den Schutz von Inhalten in Textnachrichten, insbesondere briefartigen Textnachrichten wie E-Mails, bei deren Übertragung die Authentifizierung der entsprechenden Kommunikationspartnern notwendig ist, stehen seit vielen Jahren leistungsfähige technischen Lösungen bereit. Dennoch werden diese im Alltag nur in einem geringen Umfang genutzt. Im Bereich von Unternehmen ist hierzu genügend IT-Wissen vorhanden, beispielsweise in Form eines Administrators, um eine entsprechende Software für die verschlüsselte Übertragung der Textnachrichten zu wählen, zu installieren und entsprechend zu konfigurieren. Im privaten Bereich ist allerdings dieses IT-Wissen bei den meisten Benutzern nicht vorhanden. Public Key, Key Ring, Certificate Authority oder Key Server sind für Benutzer von Textnachrichten im privaten Bereich meist nichtssagende Begriffe. Somit wird von der Verwendung von verschlüsselten und authentifizierten E-Mails Abstand genommen, wodurch ein Angreifer nach Belieben den Inhalt von Textnachrichten mitlesen kann.

Seit der enormen Leistungssteigerung von mobilen Endgeräten, wie Smart Phones, Mobiltelefonen, PDA's und der gleichen, werden diese mobilen Endgeräte vermehrt dazu verwendet, E-Mails zu übertragen.

In der WO-2006/136001-A1 wird daher ein Verfahren zum verschlüsselten Versenden von Emails über Mobilfunkgeräte gezeigt. Dabei ist die Verwendung von kryptografischen Schlüsseln, insbesondere nach einer Public-Key Infrastruktur, kurz PKI, vorgeschlagen. Ein Mobiltelefon kann sich entsprechende öffentliche Schlüssel von E-Mail Empfängern, die in einer Zertifizierungsstelle verifiziert wurden, in einem Speicherbereich des Telefons ablegen. Über einen Internetserver ist es dem Benutzer möglich, entsprechende Zertifikate über die Schlüssel der Empfänger in das Mobiltelefon zu laden. Diese Möglichkeit ist aber sehr umständlich, da der Benutzer die Internetadresse des Servers kennen muss und dann darauf vertrauen muss, dass das gewünschte Zertifikat auch abrufbar ist. Weiterhin ist bei dieser Art von Verschlüsselung eine hohe Interaktivität zwischen dem Benutzer und seinem mobilen Endgerät vorhanden, sodass dieses Verfahren eher umständlich und aufwendig ist.

In EP 1 289 326 A1 wird das Laden einer Software auf ein Gerät mittels auf einer Karte gespeicherter asymmetrischer Schlüssel abgesichert. Ein Gerät sucht gemäß US 2009/0300346 zunächst lokal und dann entfernt auf einem Server nach dem Zertifikat eines Empfängers von Daten. In US 2004/0133520 A1 fängt ein Server eines lokalen Netzwerkes des Client ungesicherte Nachrichten ab und ver- oder entschlüsselt diese, um sie als gesicherte Nachrichten weiter zu leiten.

Der Artikel "Web Server on a SIM card" von Lazaros Kyrillidis beschreibt den Einsatz eines Smart Card Web Servers in einem Wahlsystem. Auf einer SIM-Karte kann ein Web Server installiert sein, welcher einen vorab gespeicherten öffentlichen Schlüssel der Regierung verwendet, um Daten des Benutzers verschlüsselt an einen Wahlserver zu übertragen.

EP 1 471 453 A2 zeigt ein E-Mailsystem, in welchem ein USB-Token die zwischen Client und Server ausgetauschten E-Mails ver- bzw. entschlüsselt.

Ausgehend vom Stand der Technik, liegt der hier vorgestellten Erfindung die Aufgabe zugrunde, das Verschlüsseln von Textnachrichten einfacher und schneller zu machen. Dabei soll das Verschlüsseln sicher und ohne Benutzeraufwand bzw. ohne Detailwissen durchführbar sein.

Die Aufgabe der Erfindung wird durch die in dem nebengeordneten unabhängigen Patentanspruch 1 beschriebenen Maßnahmen gelöst. Vorteilhafte Ausgestaltungen sind in den jeweils abhängigen Ansprüchen beschrieben. Es liegt ein Verfahren zum kryptografischen Verschlüsseln einer elektronischen Textnachricht, insbesondere einer E-Mail, in einem mobilen Endgeräts vor. Dabei wird die Textnachricht über ein Mobilfunknetz an eine entfernte Empfängerinstanz nach der Verschlüsselung gesendet. Das Verfahren umfasst die Schritte: Aufbauen eines Kommunikationskanals über das Mobilfunknetz zu einer Mobilfunkzertifikatinstanz durch das Sicherheitselement. Empfangen eines Zertifikats von der Mobilfunkzertifikatinstanz über den aufgebauten Kommunikationskanal im Mobilfunknetz in dem Sicherheitselement, wobei das Zertifikat zumindest einen öffentlichen Schlüsselteil eines asymmetrischen Schlüsselpaars der entfernten Empfängerinstanz beinhaltet und Verschlüsseln der Textnachricht unter Verwendung des empfangenen Zertifikats durch das mobile Endgerät oder das Sicherheitselement.

Weiterhin wird ein Verfahren zum Senden von Zertifikaten durch eine Mobilfunkzertifikatinstanz in einem Mobilfunknetz betrachtet. Das Verfahren umfasst die Schritte: Senden eines Zertifikats an ein mobilen Endgeräts über einen, von einem Sicherheitselement im mobilen Endgerät aufgebauten Kommunikationskanal über das Mobilfunknetz, wobei das Zertifikat einen öffentlichen Schlüsselteil eines asymmetrischen Schlüsselpaars einer entfernten Empfängerinstanz beinhaltet und Weiterleiten der Zertifikatsanforderung von der Mobilfunkinstanz an eine weitere Zertifikatinstanz, falls das Zertifikat nicht in der Mobilfunkzertifikatinstanz verfügbar ist.

Das Sicherheitselement ist insbesondere als Hardwarekomponente ausgestaltet und als ein fest integrierter Bestandteil im mobilen Endgerät angeordnet, wobei es entweder in der Form nicht vom mobilen Endgerät entnommen werden kann, beispielsweise als M2M Modul, Co-Prozessor bzw. Trusted Base. Alternativ ist das Sicherheitselement eine Hardwarekomponente in Form eines entnehmbaren Moduls mit Sicherheitsfunktionalität ausgestaltet und mit dem mobilen Endgerät verbunden, beispielsweise als Chipkarte, insbesondere eines Subscriber Identification Module, kurz SIM-Karte, Smart Card, Massenspeicherkarte, USB-Token, Multimediakarte, Secure MicroSD-Karte, Mobilfunknetztoken, z.B. ein UMTS-Surfstick. Alternativ ist das Sicherheitselement als eine Softwarekomponente in Form eines Trusted Platform Moduls als vertrauenswürdiger Teil des Betriebssystemkernels des mobilen Endgerätes bzw. als ein Sicherheitssoftware-Algorithmus ausgestaltet.

Das Verschlüsseln der Textnachricht nach dem Empfangen des Zertifikats erfolgt entweder durch das Endgerät, beispielsweise mittels einer zentralen Recheneinheit. In diesem Fall greift beispielsweise eine Verschlüsselungsapplikation des mobilen Endgeräts auf das empfangene Zertifikat zu und verschlüsselt die Textnachricht. Dies erfolgt insbesondere, wenn das Zertifikat als eigenständige Datei in einem vertrauenswürdigen Bereich, beispielsweise einer Secure µSD Karte oder einem Massenspeicherbereich einer SIM-Karte abgelegt ist und das mobile Endgerät auf diese Zertifikate in vertrauenswürdiger Art zugreifen kann.

Alternativ erfolgt das Verschlüsseln der Textnachricht durch das Sicherheitselement selbst, wobei beispielsweise eine Verschlüsselungsapplikation auf dem Sicherheitselement das empfangene Zertifikat verwendet und die Textnachricht verschlüsselt.

Ein mobiles Endgerät ist insbesondere ein Mobiltelefon oder Smart Phone, aber auch Netbooks bzw. Laptops mit entsprechender Mobilfunknetzverbindung.

Als Mobilfunknetz wird in dieser Anmeldung eine technische Infrastruktur verstanden, auf der die Übertragung von Signalen für den Mobilfunk stattfindet. Dabei ist im Wesentlichen das Mobilvermittlungsnetz, in dem die Übertragung und Vermittlung der Signale zwischen ortsfesten Einrichtungen und Plattformen des Mobilfunknetzes stattfinden, sowie das Zugangsnetz (auch als Luftschnittstelle bezeichnet), in dem die Übertragung der Signale zwischen einer Mobilfunkantenne und einem mobilen Endgerät stattfindet, zu verstehen. Beispielsweise das "Global System for Mobile Communications", kurz GSM als Vertreter der sogenannten zweiten Generation oder das General Packet Radio Service, kurz GPRS und Universal Mobile Telecommunications System, kurz UMTS als Vertreter der sogenannten dritten Generation von Mobilfunknetzen seien hier beispielhaft erwähnt, wobei bei der dritten Generation das Mobilvermittlungsnetz um die Fähigkeit einer paketorientierten Datenübertragung erweitert wird, das Funknetz an sich aber unverändert ist.

Als eine Mobilfunkzertifikatinstanz ist eine Instanz des Mobilfunknetzes zu verstehen, die die Zertifikate der Empfängerinstanz verwaltet. Sie ist als ein Push Server ausgestaltet, sodass die Kommunikation zwischen Sicherheitselement und Mobilfunkinstanz vom Server gesteuert wird und primär in eine Richtung verläuft, nämlich von der Mobilfunkzertifikatsinstanz zum Sicherheitselement. Das Sicherheitselement selbst hat somit nur geringen Einfluss auf die Zertifikatsübertragung. Insbesondere ist der Kommunikationskanal unidirektional. Dies stellt einen wesentlichen Unterschied zu den bislang üblichen Pull-Servern dar, wobei ein Empfänger bewusste Entscheidungen treffen muss, um an den Inhalt des Servers zu gelangen.

Als ein Kommunikationskanal wird hierbei ein Mittel zum Übertragen von Daten von einem Sender zu einem Empfänger über eine räumliche und oder zeitliche Distanz. Die Kommunikation ist dabei eine Signalübertragung, eine wechselseitige Steuerung und in einfachen Fällen auch eine Verbindung von/ zwischen technischen Geräten. In der Informationstheorie wird eine Kommunikation unter anderem durch das Sender-Empfänger-Modell geprägt: Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht d.h. die zu übertragene Information dekodieren kann. In der Informationstheorie geht die Kommunikation auch über das syntaktische Sender-Empfänger-Modell hinaus: Die Bedeutung und der Informationsgehalt der Kommunikation sind immer von dem semantischen Kontext einer Übertragung abhängig.

Als eine entfernte Empfängerinstanz ist eine, von dem Sicherheitselement, geographisch entfernte Instanz verstanden, die von dem Sicherheitselement über das Mobilfunknetz kontaktierbar ist. Diese Empfängerinstanz muss nicht zwingend eine Mobilfunkinstanz sein, sondern kann eine, über ein Gateway/ Router erreichbare Instanz des Internet sein oder prinzipiell über eine Internet-Protokoll Adresse erreichbar sein. Beim Entschlüsseln von empfangenen verschlüsselten Textnachrichten wird hier ebenfalls der Begriff entfernte Empfängerinstanz verwendet, obwohl es technisch gesehen eine entfernte Senderinstanz ist. Da das Verfahren unabhängig vom Senden oder Empfangen der Textnachrichten angewendet werden kann, wurde zur Vereinfachung auf die Einführung des Begriffs Senderinstanz verzichtet. Senderinstanz und Empfängerinstanz sind hier synonym verwendbar und betiteln die geographisch entfernte Instanz.
Zunächst muss jeder Beteiligte an diesem Verfahren ein asymmetrisches Schlüsselpaar erzeugen. Der private Schlüsselteil dieses Schlüsselpaars wird gesichert abgelegt, im Fall des Benutzers des mobilen Endgeräts 1, wird er auf dem Sicherheitselement erzeugt und in einem Speicherbereich des Sicherheitselements abgelegt, sodass er nicht von außen zugänglich ist. Der dazugehörige öffentliche Schlüsselteil des Schlüsselpaars wird vom Sicherheitselement an die Mobilfunkzertifikatinstanz gesendet und von dieser zertifiziert. Mittels dieses Zertifikats wird der Schlüssel öffentlich zur Verfügung gestellt.

Das Zertifikat im Sinne der Anmeldung ist ein digitales Zertifikat. Das Zertifikat beinhaltet strukturierte Daten, die die Empfängerinstanz als Eigentümer des öffentlichen Schlüssels bestätigen, da durch das Zertifikat ein öffentlicher Schlüssel des Empfängers einer bestimmten Identität, zum Beispiel der Person oder einer Organisation zugeordnet wird. Somit ermöglichen die Zertifikate einen Schutz von Vertraulichkeit, Authentizität und Integrität. Da die Mobilfunkzertifikatinstanz und das Sicherheitselement genau aufeinander abgestimmt sind und sich somit gegenseitig als vertrauenswürdig einstufen, muss das Zertifikat nicht komplett übertragen werden, sondern kann auch nur teilweise übertragen werden, wobei stets der öffentliche Teil des Schlüssels der Empfängerinstanz übertragen wird. Das Zertifikat kann darüber hinaus verschiedene Strukturen und Inhalte aufweisen, beispielhaft seien hier dis Strukturen gemäß dem Format X.509, das in RFC 2440 beschriebene Zertifikat, das in WTLS beschriebene Zertifikat oder das Card Verifiable- Zertifikat.

Der Vorteil des hier vorgestellten erfindungsgemäßen Verfahrens ist nicht im Zusammenspiel von mobilem Endgerät und dem Sicherheitselement, sondern im Zusammenspiel einer Mobilfunkzertifikatinstanz mit dem Sicherheitselement zu sehen. Das Sicherheitselement im mobilen Endgerät sucht die entsprechenden Zertifikate für die entfernte Empfängerinstanz der Textnachricht auf der Mobilfunkzertifikatsinstanz, ausgestaltet als ein Server für Zertifikate von Empfängerinstanzen. Das ist aber nicht irgendein Internetserver, sondern ein speziell vordefinierter Push Server des jeweiligen Mobilfunkanbieters bzw. Mobilfunkbetreibers. Das Zusammenspiel von Sicherheitselement und Mobilfunkzertifikatsinstanz kann somit benutzerseitig nicht einfach verändert werden.

Mit diesem Verfahren herrscht nunmehr kein Konfigurationsaufwand mehr für das Versenden von sicheren Textnachrichten. Das zum Verschlüsseln benötigte Zertifikat mit dem öffentlichen Schlüsselteil wird über die Mobilfunkinstanz des Mobilfunkanbieters bekannt gemacht, sodass sich der Benutzer des mobilen Endgeräts nicht um den Erhalt des Zertifikats kümmern muss. Alle Sicherheitsmodule eines Mobilfunkanbieters weisen nun dieselbe Konfiguration auf. Änderungen in der Konfiguration, wie beispielsweise eine neue Certificate Authority werden nur in der Mobilfunkzertifikatinstanz ausgeführt und haben keine Auswirkungen auf die vielen ausgeteilten Sicherheitsmodule.

In vorteilhafter Weise wird das Verfahren in einem Applet, beispielsweise einem SIM-Toolkit-Applet zur Ver-/Entschlüsselung von Textnachrichten automatisiert vor dem Versand oder nach dem Erhalt der verschlüsselten Textnachricht ausgeführt, sodass der Benutzer kaum bemerkt, dass seine Textnachricht verschlüsselt abgesendet wird.

Dieses Verfahren hat weiterhin den Vorteil, dass der Mobilfunkanbieter den kostenpflichtigen Zertifikatsdienst einfach abrechnen kann, da er diese Dienstleistungen unabhängig von Pre- oder Postpaid Verträgen vornehmen kann. Somit sind zusätzliche Einnahmequellen für einen Mobilfunkanbieter geschaffen, wohingegen nur ein geringer Aufwand zum Erweitern eines ohnehin vorhandenen Abrechnungssystems erforderlich ist. Für den einzelnen Benutzer des Verfahrens ist das Verschlüsseln ebenfalls günstig, da einhundert Zertifikate beispielsweise zehn Euro kosten. Unter dieser Annahme beläuft sich der zusätzliche Umsatz für den Mobilfunkanbieter aufgrund der Masse der Benutzer bei einem Richtwert von zwanzig Zertifikaten je Jahr und Benutzer bei ca. 39 Millionen Benutzern des Anbieters T-Mobile auf ca. 78 Millionen Euro. Hierbei ist anzumerken, dass jedes empfangene Zertifikat vom für eine unbegrenzte Anzahl von zu verschlüsselnden Textnachrichten genutzt werden kann, solange das Zertifikat gültig ist.

Besonders vorteilhaft ist es, wenn das Aufbauen des Kommunikationskanals im Sicherheitselement mittels eines Smart Card Web Server erfolgt. Bevorzugt ist dieser aufgebaute Kommunikationskanal kryptografisch gesichert, wobei während des Aufbaus eine gegenseitige Authentifizierung zwischen Sicherheitselement und Mobilfunkzertifikatinstanz stattfindet. Ein für den Aufbau des Kommunikationskanals und das Übertragen des Zertifikats benötigter Schlüssel wird insbesondere via Over the Air Dienst, kurz OTA auf das Sicherheitselement geladen. Alternativ ist auch die heute übliche Personalisierung des Schlüssels möglich.

Der Abruf von Zertifikaten durch das Sicherheitselement bei der Mobilfunkzertifikatinstanz kann dadurch besonders effizient gestaltet werden, da sowohl die Applikation auf dem Sicherheitselement als auch die Mobilfunkzertifikatinstanz genau aufeinander abgestimmt und beide Einheiten gegenseitig vertrauenswürdig sind. Hierdurch kann insbesondere das von der Mobilfunkzertifikatinstanz zum Sicherheitselement übertragene Zertifikat reduziert werden. Es muss nun nicht mehr das gesamte Zertifikat, sondern nur eine Teilmenge des Zertifikats übertragen werden, insbesondere der eine Zuordnungsinformation der entfernten Empfängerinstanz (der Empfängername) und dessen öffentlicher Teil eines asymmetrischen Schlüssels der entfernten Empfängerinstanz.

Es wäre somit möglich, ein Zertifikat mit einer Datengröße von 256 Bytes in nur zwei oder drei Kurzmitteilungen, kurz SMS, zu übertragen. Dies entspricht einer reduzierten Datenmenge von 280 bis 420 Bytes, während bei einer herkömmlichen Übertragung von Zertifikaten bislang 2kB übertragen werden müssen. Diese reduzierte Datenmenge des Zertifikats ist bei einer vergleichsweise langsamen Hardware-Schnittstelle zwischen dem mobilen Endgerät und dem Sicherheitselement sehr vorteilhaft. Die Sicherheit und Vertrauenswürdigkeit des übertragenen Zertifikats wird durch den Mobilfunkanbieter, insbesondere mit OTA-Diensten, gemäß GSM Spezifikation 03.48 garantiert. Der Mobilfunkanbieter selbst kann die ihm komplett vorliegenden Zertifikate standardgemäß prüfen.

Dahingegen verlässt der private Schlüsselteil des Benutzers des mobilen Endgeräts nie das Sicherheitselement, da er dort erzeugt wird und somit das Verfahren eine hohe Sicherheit aufweist.

Bevorzugt wird vor dem Aufbau des Kommunikationskanals ein Speicherbereich des Sicherheitselements auf Vorhandensein des Zertifikats der entfernten Empfängerinstanz überprüft wird und wobei bei Vorhandensein des Zertifikats zusätzlich geprüft wird, ob das Zertifikat gültig ist. Somit werden keine Zertifikate von der Mobilfunkzertifikatinstanz geladen, die bereits auf dem Sicherheitselement sind. Es entstehen keine Mehrkosten für den Benutzer und das Mobilfunknetz wird nicht unnötig belastet.

Besonders vorteilhaft ist es, wenn das von der Mobilfunkzertifikatinstanz empfangene Zertifikat in einem Speicherbereich des Speicherelements abgelegt wird. Bei Bedarf wird dem Sicherheitselement mehr Speicherplatz für das Ablegen der Zertifikate zugesprochen. Somit sind die Zertifikate, sofern sie noch gültig sind, mehrfach verwendbar, ohne, dass diese erneut von der Mobilfunkzertifikatinstanz geladen werden müssen. Zusätzlich können die Zertifikate auch als eigenständige Dateien auf dem Sicherheitselement abgelegt sein, sodass diese für andere Applikationen auf dem Sicherheitselement oder dem mobilen Endgerät genutzt werden können.

Unabhängig davon weist auch das mobile Endgerät einen Mailclient auf, der sehr komfortabel ausgestaltet und an die speziellen Hardwareeigenschaften, wie Display und Eingabemöglichkeiten des jeweiligen mobilen Endgerätetyps angepasst ist.

Zur vereinfachten aber trotzdem sichere Benutzung ist es von Vorteil, wenn das Sicherheitselement als Proxy-Server, insbesondere E-Mail Proxy-Server in den Konfigurationseinstellungen des mobilen Endgeräts ausgewählt wird. Das Sicherheitselement weist weiterhin einen Mail-Client zum Empfangen der zu verschlüsselnde Textnachricht vom mobilen Endgerät über ein Internet-Message-Access-Protocol, kurz IMAP-S-Protokoll beziehungsweise zum Senden der entschlüsselten Textnachricht vom mobilen Endgerät über ein IMAP-S-Protokoll auf.

Insbesondere ist das Zertifikat ein X.509 gemäß ITU-T Standard Zertifikat für eine PKI. Hierbei wird ein digitales Zertifikat an eine Zuordnungsinformation, insbesondere eine E-Mail-Adresse oder einen Empfängernamen gebunden. Die Struktur des kompletten Zertifikats weist unter anderem die Version, eine Seriennummer, eine Algorithmusidentifikationsnummer, einen Aussteller, eine Gültigkeitsdauer, einen Zertifikatsinhaber, eine Algorithmusinformation bezüglich des öffentlichen Schlüssels und den öffentlichen Schlüsselteil des Zertifikatbesitzers auf.

Das empfangene Zertifikat ist in vorteilhafter Weise nur eine bestimmte Zeitdauer, beispielsweise ein Jahr gültig. Das Sicherheitselement empfängt von der Mobilfunkzertifikatinstanz eine OTA-Mitteilung über die Ungültigkeit des Zertifikats.

Dies ist vorteilhaft, da das Sicherheitselement selbst über keine eigene Zeitmessung verfügt. Darüber hinaus entfällt die Notwendigkeit für das Sicherheitselement, sich Datum und Uhrzeit von einer Mobilfunkinstanz im Internet zu beschaffen. Dadurch minimieren sich zu übertragene Datenmengen und der Implementierungsaufwand.

Das Sicherheitselement empfängt bevorzugt eine Trigger-Kurzmitteilung, Trigger-SMS, von der Mobilfunkzertifikatinstanz als Benachrichtigung über die Ungültigkeit eines zuvor empfangenen Zertifikats und baut den Kommunikationskanal zum Ersetzen des ungültigen Zertifikats zur Mobilfunkzertifikatinstanz auf. Dieses Verfahren entspricht dem SCWS-Admin Protokoll und ist sehr einfach implementierbar.

In Kombination mit dem zuvor genannten Punkt ist die Benachrichtigung des Sicherheitsmoduls durch die Mobilfunkzertifikatinstanz optimal. Da nicht das gesamte Zertifikat, sondern nur der öffentliche Schlüsselteil des asymmetrischen Schlüssels der entfernten Empfängerinstanz und eine Zuordnungsinformation übertragen werden, besitzt das Sicherheitsmodul ohnehin keine Information mehr, wann das erhaltene Zertifikat ungültig wird. Gleichzeitig muss das Sicherheitsmodul nun nicht mehr prüfen, ob der öffentliche Schlüssel aus anderen Gründen ungültig geworden ist, beispielsweise auf eine sogenannte Revocation List gesetzt wurde.

Bevorzugt empfängt das Sicherheitselement von der Mobilfunkzertifikatinstanz eine Mitteilung, wenn das Senden des Zertifikats weitere Kosten verursacht. Daraufhin leitet das Sicherheitselement dem Benutzer des mobilen Endgeräts diese Mitteilung weiter. Der Benutzer kann nun wählen, ob das Zertifikat gesendet werden soll, sodass die Textnachricht verschlüsselt werden kann, ob die Nachricht unverschlüsselt oder überhaupt nicht versendet werden soll.

In diesem Zusammenhang besteht auch die Möglichkeit, dass die Mobilfunkzertifikatinstanz bei Nichtvorhandensein des zu sendenden Zertifikats von einer weiteren, insbesondere einer weiteren vertrauenswürdigen Zertifikatinstanz zu erhalten.

Sollte das zu sendende Zertifikat nicht erhältlich ist, deutet dies darauf hin, dass die weitere Zertifikatinstanz nicht vertrauenswürdig ist. In diesem Fall empfängt das Sicherheitselement von der Mobilfunkzertifikatinstanz eine Mitteilung, dass das zu sendende Zertifikat nicht vertrauenswürdig ist.

Die Zertifikatsanforderung wird bevorzugt erst von der Mobilfunkzertifikatinstanz an die weiteren Zertifikatinstanzen weitergeleitet, nachdem die Mobilfunkzertifikatinstanz das Sicherheitselement die Mitteilung über das Verursachen von weiteren Kosten gesendet hat und die Mobilfunkzertifikatinstanz vom Sicherheitselement eine Zertifikatsbesorgungsanforderung empfangen hat.

Insbesondere empfängt die Mobilfunkzertifikatinstanz eine eindeutige Identifikationsnummer des Sicherheitselements, beispielsweise die IMSI, und die Mobilfunkzertifikatinstanz protokolliert das Senden des Zertifikats an das Sicherheitselement. Somit verfügt die Mobilfunkzertifikatinstanz über die Information, an welches Sicherheitsmodul, welche Zertifikate gesendet worden sind.

Die Mobilfunkzertifikatinstanz überwacht nun zusätzlich die Gültigkeit bereits versendeter Zertifikate und sendet eine Benachrichtigung über die Ungültigkeit an das Sicherheitselement direkt in Form einer OTA-Mitteilung, indirekt in Form einer Trigger-SMS und/oder direkt während des Versands eines anderen Zertifikats.

Da die Mobilfunkzertifikatinstanz über das Protokoll verfügt, welche Zertifikate an welches Sicherheitsmodul übertragen wurden, kann diese leicht herausfinden, welches Sicherheitsmodul ein neues Zertifikat benötigt und es davon in Kenntnis setzen. Dies ist insbesondere vorteilhaft, da das Sicherheitsmodul selbst über keine eigene Zeitmessung verfügt.

Selbstverständlich kann statt der Verwendung von Kurzmitteilungen zum Übertragen der Zertifikate auch ein anderer Kommunikationskanal verwendet werden. Die Übertragung mittels Kurzmitteilung ist insbesondere von Vorteil, da eine echte Push Server - Client Datenübertragung zwischen Mobilfunkzertifikatsinstanz als Server und Sicherheitselement als Client stattfindet, während bei einer TCP/IP Datenübertragung das SCWS- Admin - Protokoll mit Trigger-SMS gestartet werden muss, und danach ein Pull Client - Server erfolgt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein erstes Ausführungsbeispiel der Erfindung zum Verschlüsseln einer Textnachricht und anschließendem Versenden;
- Figur 2: Ein zweites Ausführungsbeispiel der Erfindung zum Verschlüsseln von Nachrichten und späterem Benachrichtigen über die Ungültigkeit eines erhaltenen Zertifikats;
- Figur 3: Ein erstes Ausführungsbeispiel zum Entschlüsseln einer verschlüsselten Textnachricht;
- Figur 4: Eine erfindungsgemäßes System mit einem Sicherheitsmodul in einem mobilen Endgerät, einer Mobilfunkzertifikatinstanz und weiteren Zertifikatinstanzen;
- Figur 5: Ein drittes Ausführungsbeispiel der Erfindung zum Verschlüsseln von Nachrichten durch Anfordern des Zertifikats bei einer weiteren Zertifikatinstanz.

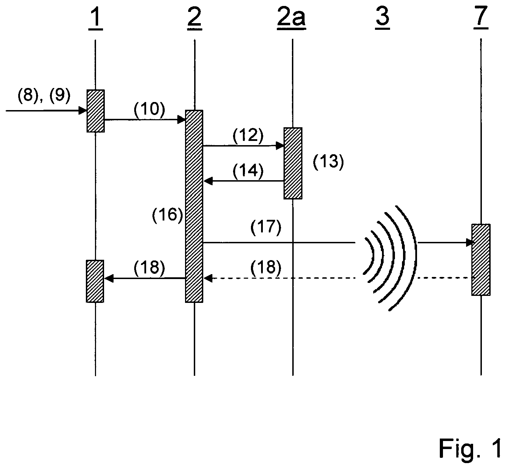

Figur 1 zeigt ein erstes Ausführungsbeispiel der Erfindung zum Verschlüsseln einer Textnachricht, im Folgenden eine E-Mail, und anschließendem Versenden der E-Mail an eine entfernte Empfängerinstanz 7.

Zunächst muss jeder Beteiligte an diesem Verfahren ein asymmetrisches Schlüsselpaar erzeugen. Der private Schlüsselteil dieses Schlüsselpaars wird gesichert abgelegt, im Fall des Benutzers des mobilen Endgeräts 1, wird er auf der SIM 2 erzeugt und im Speicherbereich 2a abgelegt, sodass er nicht von außen zugänglich ist. Der dazugehörige öffentliche Schlüsselteil des Schlüsselpaars wird von der SIM 2 an den MFZS 4 gesendet und von dieser MFZS 4 zertifiziert. Mittels dieses Zertifikats wird der Schlüssel öffentlich zur Verfügung gestellt.

Gemäß Schritt 8 der Figur 1 wird eine E-Mail durch einen Benutzer eines mobilen Endgeräts 1 verfasst. Dazu verwendet der Benutzer des mobilen Endgeräts 1 seinen bisher üblichen Mailclient, der oft sehr komfortabel gestaltet und an die speziellen Hardwareeigenschaften, wie Display und Eingabemöglichkeiten des jeweiligen Endgerätetyps angepasst ist. Ein Sicherheitselement 2, hier eine SIM-Karte 2, ist im mobilen Endgerät integriert und agiert nun als ein E-Mail-Proxy, der in den Konfigurationseinstellungen des E-Mail Clients des mobilen Endgeräts 1 angegeben werden kann. Die SIM-Karte 2 besitzt weiterhin einen Mailclient, wie er zum Empfangen und Versenden von E-Mails genutzt wird. Vorzugsweise unterstützt dieser Mail Client das IMAP-S-Protokoll, welches eine sichere und authentifizierte Verbindung mit dem Mailserver erlaubt.

Alternativ verfügt das mobile Endgerät 1 über einen Webbrowser mit dem Internetseiten abgerufen werden können. Mit Hilfe dieses Webbrowsers greift der Benutzer auf einen Smart Card Web Server, kurz SCWS der SIM-Karte 2 zu. Die SIM-Karte 2 stellt dem Benutzer somit ein Webfrontend zur Verfügung, mit dem er E-Mails lesen, schreiben und verwalten kann. Webfrontends für E-Mail-Dienste sind heutzutage weit verbreitet und werden deshalb nicht weiter erläutert.

Möchte der Benutzer nun eine E-Mail versenden, verfasst er diese gemäß einer der beiden erläuterten Möglichkeiten, siehe Schritt 8. Im Anschluss wählt der Benutzer gemäß Schritt 9, welche entfernten Empfängerinstanz 7 diese verfasste E-Mail erhalten soll. Hierbei können mehrere Empfängerinstanzen 7 in eine E-Mail integriert werden. Sobald er die E-Mail absenden möchte, überträgt das mobile Endgerät 1 die E-Mail an das SIM 2. Das SIM 2 prüft nun in einem Speicherbereich 2a ab, ob für den/die angegebenen Empfängerinstanzen 7 Zertifikate 13 zur Verschlüsselung der E-Mail auf dem SIM 2 vorliegen, siehe Schritt 12. Ist das Zertifikat 13 im Speicherbereich vorhanden und ist dieses Zertifikat 13 gültig, wird das Zertifikat 13 im Schritt 14 dem SIM 2 bereitgestellt. Das Zertifikat ist ein X.509 Zertifikat und beinhaltet neben einem Empfängernamen als Zuordnungsinformation weiterhin den öffentlichen Teil eines asymmetrischen Schlüsselpaars der entfernten Empfängerinstanz. Die E-Mail wird nun im Schritt 16 durch das SIM 2 verschlüsselt. Gemäß Schritt 17 erfolgt nun das Versenden der verschlüsselten E-Mail an die entfernte Instanz über das Mobilfunknetz 3.

Die entfernte Instanz 7 ist eine mittels IP-Adresse erreichbare Instanz in einem Netzwerk, bevorzugt dem Internet. Der private Schüsselteil des asymmetrischen Schlüsselpaars der entfernten Empfängerinstanz 7 wird nun dazu verwendet, die E-Mail zu entschlüsseln, damit die E-Mail gelesen werden kann. Optional informiert die entfernte Empfängerinstanz 7 das SIM 2 über den erfolgreichen Empfang und gegebenenfalls über das erfolgreiche Entschlüsseln, siehe Schritt 18. Der Erfolg wird im mobilen Endgerät optional dargestellt.

Der Einsatz dieses Verfahrens ist nicht auf SIM 2 beschränkt. Auch eine Secure MicroSD-Karte könnte die notwendigen Funktionen und Zertifikate 13 bereitstellen. Ebenso kann das Verfahren durch eine Trusted Base (TB) auf dem mobilen Endgerät 1 implementiert werden. Optional ist es denkbar, dass die auf dem SIM 2 gespeicherten Zertifikate 13 nicht nur der SIM 2 selbst, sondern auch anderen Applikationen auf dem mobilen Endgerät 1 zugänglich gemacht werden. Denkbar ist dies insbesondere bei Massenspeichern, denn hier werden die Zertifikate 13 als Dateien abgelegt und sind ohne Anpassung der Applikationen auf dem mobilen Endgerät nutzbar. Das Verschlüsseln der Textnachricht übernimmt in diesem Fall eine Applikation auf dem mobilen Endgerät 1.

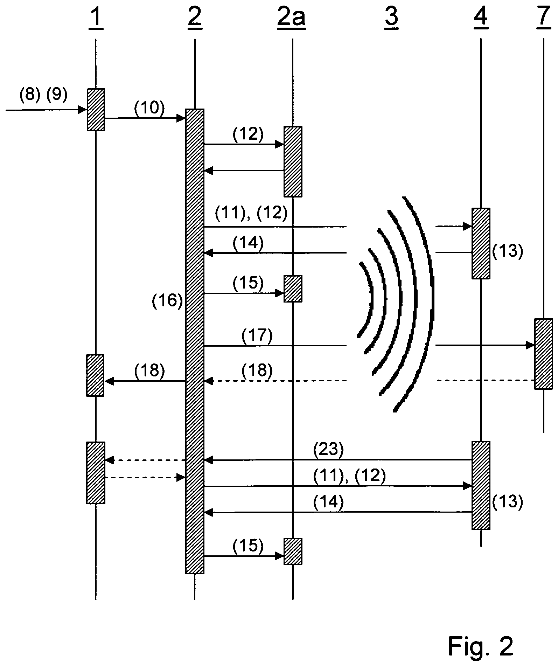

In Figur 2 ist ein zweites Ausführungsbeispiel zum Verschlüsseln zu versendender E-Mails dargestellt. Das Verfahren ist bis Schritt 12 identisch mit dem Verfahren gemäß Figur 1, sodass zur Vermeidung von Wiederholung nur auf die daran anschließenden Schritte eingegangen wird.

Sollte im Speicherbereich 12 das Zertifikat 13 nicht vorhanden sein, baut der SCWS der SIM 2 gemäß Schritt 11 einen Kommunikationskanal zu einem Mobilfunkzertifikatserver 4, hier abgekürzt mit MFZS, des Mobilfunkanbieters auf. Diese Verbindung ist gegenseitig authentifiziert und verschlüsselt. Die gegenseitige Authentifizierung kann durch einen auf dem SIM 2 gespeicherten, symmetrischen Schlüssel erfolgen. Da der Mobilfunkanbieter ohnehin Eigentümer des SIM 2 ist, kann ein derartiger Schlüssel entweder bereits zum Produktionszeitpunkt der SIM 2 oder später via Over The Air Dienst nach GSM 03.48, hier OTA auf das SIM 2 gebracht werden.

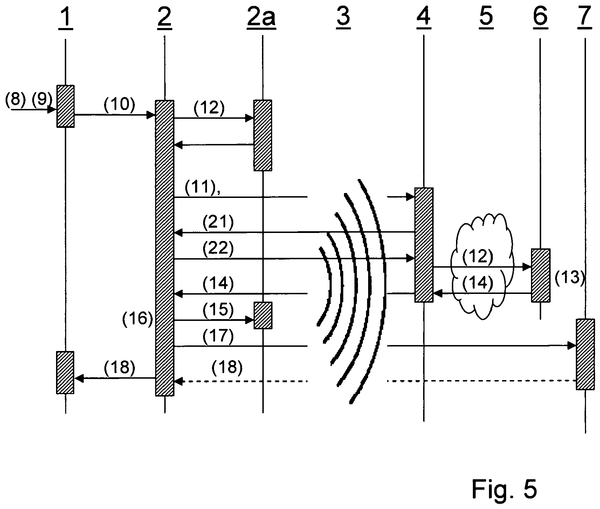

Über diese verschlüsselte Verbindung fragt nun das SIM 2 den MFZS 4 nach den fehlenden Zertifikat(en) für eine oder mehrere E-Mail Empfängeradressen, siehe Schritt 12. Der MFZS 4 verfügt über einen Speicher indem das Zertifikat 13 abgelegt ist. Wird ein Zertifikat nicht gefunden, wird dies dem SIM 2 mitgeteilt, näheres dazu in Figur 5.

Das Zertifikat 13 wird nun gemäß Schritt 14 an die SIM 2 übertragen. Für die zukünftige Benutzung legt das SIM 2 das Zertifikat 13 in einem internen Speicher ab, siehe Schritt 15, sodass nicht immer wieder beim MFZS 4 nachgefragt werden muss. Diese Vorgehensweise erhöht die Nutzerakzeptanz deutlich. Außerdem wird die Netzbelastung reduziert und die Sendegeschwindigkeit für E-Mails mit bekannten Empfängern 7 deutlich erhöht.

Ist das Zertifikat 13 in dem SIM 2 verfügbar, werden die Schritte 16 bis 18 gemäß Figur 1 durchgeführt.

Der Vorteil liegt darin, dass alle SIM 2 eines Mobilfunkanbieters dieselbe Konfiguration aufweisen. Bei Änderungen in der Konfiguration, beispielsweise eine neue Certificate Authority oder aus bestimmten Gründen ungültig gewordene Zertifikate führen nur zu einer Änderung im MFZS 4 und haben keine Auswirkungen die SIM 2 im Feld. Damit reduziert sich auch der Aufwand für jeden Kunden, denn er muss sich nicht selbst um eine Anpassung der Konfiguration kümmern, sondern Experten vom Mobilfunkanbieter übernehmen dies.

Die von der MFZS 4 erhaltenen Zertifikate 13 sind nicht unbegrenzt gültig. Entweder sie werden nach einem vordefinierten Zeitraum ungültig, beispielsweise nach einem Jahr oder der zugehörige private Schlüssel des asymmetrischen Schlüsselpaars der entfernten Empfängerinstanz 7 ist auf irgendeine Art und Weise unsicher geworden, beispielsweise durch Diebstahl des privaten Schlüssels mittels Virus oder Trojaner, absichtlichem Verrat oder der private Schlüssel ist durch einen Angriff gebrochen worden. Für diesen Fall existieren sogenannte Certificate Revocation Lists, also Listen, die die zu widerrufenen Zertifikate speichern. Um auch hier den Konfigurationsaufwand für den einzelnen Benutzer möglichst gering zu halten, übernimmt der MFZS 4 zusätzlich eine Überwachungsfunktion. Der MFZS 4 protokolliert hierfür zusätzlich zu jedem angerufenen Zertifikat das SIM 2, welches das jeweilige Zertifikat angefordert hat. Dazu überträgt das SIM 2 eine eindeutige Identifikationsnummer, im einfachsten Fall die IMSI der SIM 2. Aus der Sicht des Datenschutzes ist dies nicht wirklich problematisch, denn jeder, der Internetdatenverkehr abhören kann, kann auch bei verschlüsselten E-Mails den Sender und Empfänger ermitteln.

Der MFZS 4 verfügt demnach über eine Liste, welche Zertifikate auf welches SIM 2 übertragen wurden. Beispielhaft und ohne Anspruch auf Vollständigkeit ist ein derartiges Protokoll hier dargestellt:
- < Zertifikat 1 > <IMSI1>, <IMSI2>, <IMSI3>
- < Zertifikat 2 > <IMSI4>, <IMSI3>
- < Zertifikat 3 > <IMSI1>
- < Zertifikat 4 > <IMSI7>, <IMSI1>, <IMSI4>, <IMSI8>, ...

Die Information, wann ein Zertifikat ungültig wird, steckt nun im Zertifikat selbst, siehe folgendes Beispiel unter "Validity"

Certificate:
Data:
   Version: 3 (Ox2)
   Serial Number: 1(Ox1)
   Signature Algorithm: md5WithRSAEncryption
   Issuer: C=XY, ST=Austria, L=Graz, O=TrustMe Ltd,
   OO=Certificate Authority, CN=CA/Email=ca@trustme.dom
Validity
   Not Before: Oct 29 17:39:10 2000 GMT
   Not After: Oct 29 17:39:10 2001 GMT
Subject: C=DE, ST=Austria, L=Vienna, O=Home, OO=Web Lab,
CN =anywhere.com/Email=xyz@anywhere.com
Subject Public Key Info:
   Public Key Algorithm: rsaEncryption

Dem MFZS 4 ist es somit möglich, alle SIM 2, die das Zertifikat 13 nutzen, darüber zu informieren, dass ein Zertifikat 13 ungültig ist oder demnächst wird. Dies ist insofern sinnvoll, da ein SIM 2 über keine eigene Zeitmessung bzw. vertrauenswürdige Zeitquelle verfügt.

Um anzuzeigen, dass das Zertifikat 13 ungültig ist, sendet der MFZS 4 gemäß Schritt 23 eine Benachrichtigung an das SIM 2. Optional sendet das MFZS 4 (in Figur 2 nicht dargestellt) das gültige und geprüfte Folgezertifikat mit, so dass das SIM 1 immer auf dem aktuellen Stand ist. Da technikbedingt ein SCWS via IP-Adresse für das MFZS 4 nicht erreichbar ist, sondern der SCWS von sich aus den MFZS 4 kontaktieren muss, ist es denkbar, dass bei einer Anfrage nach fehlenden Zertifikaten gemäß Schritt 11 oder 12 gleich Benachrichtigungen gemäß Schritt 23 über demnächst ungültige Zertifikate gesendet werden oder Trigger-Mitteilungen, sogenannte Trigger-SMS, zum Anstoßen des Kontaktierens der MFZS 4 übertragen werden.

Optional können gleich die gültigen und geprüften Folgezertifikate 13 an das SIM 2 geschickt werden. Eine andere Möglichkeit ist es, abgelaufene Zertifikate 13 auf dem SIM 2 mittels OTA zu ersetzen, sodass das Problem entfällt, dass der SCWS der SIM 2 nicht von der MFZS 4 erreichbar ist. Alternativ kann der SCWS auf der SIM 2 auch via OTA nur benachrichtigt werden, dass Zertifikate abgelaufen sind und er sich deshalb mit dem MFZS 4 in Verbindung setzen soll. Diese Vorgehensweise entspricht dem "SCWS Admin Protocol".

Nach Figur 2 folgt auf eine Benachrichtigung nach Schritt 23 eine Mitteilung der SIM 2 an das mobile Endgerät 1, wonach der Benutzer entscheidet, ob ein abgelaufenes Zertifikat ersetzt werden soll oder einfach das abgelaufene Zertifikat zu löschen ist. Entscheidet sich der Benutzer für das sofortige Aktualisieren des Zertifikats wird gemäß der bereits beschriebenen Schritte 11 bis 15 vorgegangen.

Beim Ersetzen von abgelaufenen oder ungültigen Zertifikaten kann wieder eine Gebühr von beispielsweise 10 Cent je Zertifikat berechnet werden.

Optional kann dieser "Benachrichtigungs- und Updatedienst" auch deaktiviert werden, damit keine ungewollten Kosten anfallen. Oder der Benutzer gibt explizit an, für welche Zertifikate er diesen "Benachrichtigungs- und Updatedienst" nutzen möchte. Alternativ wertet das SIM 2 die Nutzung der Empfängeradressen aus und deaktiviert diesen Dienst für lange nicht genutzte Adressen bzw. aktiviert ihn für häufig genutzte Adressen.

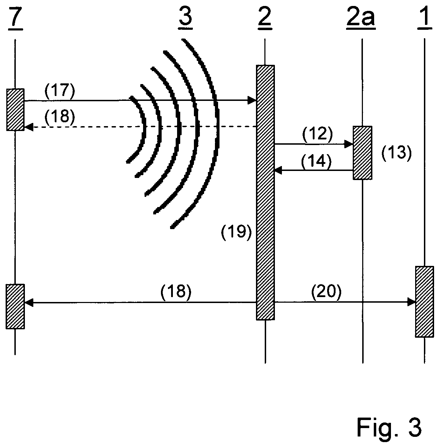

In Figur 3 ist ein Ausführungsbeispiel zum Entschlüsseln einer gemäß der Erfindung verschlüsselten E-Mail gezeigt. Prinzipiell verlaufen die Schritte äquivalent zum Verschlüsseln einer E-Mail und werden daher im Folgenden nur stichwortartig genannt.

Gemäß Schritt 17 wird von der Empfängerinstanz 7 (richtigerweise Senderinstanz, siehe Erklärung im allgemeinen Teil der Beschreibung) via Mobilfunknetz 3 eine verschlüsselte E-Mail in der SIM 2 des mobilen Endgeräts 1 empfangen. Bei ordnungsgemäßem Empfang erfolgt eine optionale Bestätigung 18. Das SIM 2 fragt nun im Speicherbereich 2a an, ob ein gültiges Zertifikat 13 zum Entschlüsseln der E-Mail vorliegt. Der im Speicherbereich 2a abgelegte private Schlüsselteil eines asymmetrischen Schlüsselpaars des Benutzers wird nun an die SIM 2 übertragen. Gemäß Schritt 19 wird nun mithilfe des privaten Schlüsselteils des asymmetrischen Schlüsselteils die E-Mail entschlüsselt und gemäß Schritt 20 an das mobile Endgerät 1 übertragen. Optional erfolgt wieder eine Bestätigung des erfolgreichen Entschlüsselns in Schritt 18.

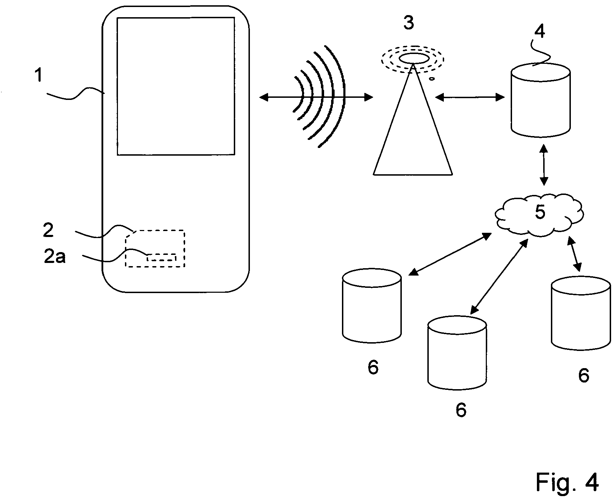

In Figur 4 ist ein skizzenhafter Komponentenaufbau des Systems zum Verschlüsseln von Textnachrichten dargestellt. Das mobile Endgerät 1, hier ein Smart Phone, beherbergt eine SIM-Karte 2 mit einem Speicherbereich 2a. Über das Mobilfunknetz 3 kann ein MFZS 4 via aufgebauten Kommunikationskanal kontaktiert werden. Der als Push-Server ausgestaltete MFZS 4 weist weiterhin einen internen Speicher zum Ablegen von Zertifikaten auf, wobei die Zertifikate einen öffentlichen Teil eines Schlüsselpaars beinhalten. Ist ein Zertifikat nicht im Speicher der MFZS 4 so können weitere Zertifizierungsserver 6 über das Internet 5 kontaktiert werden. Neu gefundene Zertifikate werden vom MFZS 4 auf Vertrauenswürdigkeit geprüft, bevor diese in den internen Speicher der MFZS 4 übernommen und an das anfragende SIM 2 gesendet werden, wobei der nähere Ablauf in Figur 5 beschrieben ist.

In Figur 5 ist ein erfindungsgemäßes Ausführungsbeispiel zum Verschlüsseln von Nachrichten durch Anfordern des Zertifikats 13 bei einer weiteren Zertifikatinstanz 6 über das Internet 5 gezeigt. Die Verfahrensschritte 8 bis 11 gleichen den Schritten der vorhergehenden Figuren und werden hier nicht weiter erläutert. Ist der MFZS 4 ein Zertifikat 13 einer entfernten Empfängerinstanz 7 nicht bekannt, benachrichtigt sie in Schritt 21 die SIM 2. Das SIM 2 kann bei fehlenden Zertifikaten optional eine Rückfrage an den Benutzer des mobilen Endgeräts 1 stellen, ob er die Mail an den Empfänger nicht oder unverschlüsselt senden möchte. Per Voreinstellung ist ebenfalls möglich, dass die E-Mail an die entfernte Empfängerinstanz 7 unverschlüsselt oder gar nicht versendet wird. Wünscht der Benutzer den verschlüsselten Versand, so sendet das SIM 2 eine entsprechende Besorgungsanforderung 22 an das MFZS 4. Das MFZS 4 verbindet sich nun über das Internet 5 oder das Mobilfunknetz 3 mit weiteren, insbesondere vertrauenswürdigen Zertifikatinstanzen 6, und fragt nach dem Zertifikat 13 an, siehe Schritt 12. Ist eine weitere Zertifikatinstanz 6 im Besitz eines derartigen Zertifikats 13, überträgt diese das Zertifikat im Schritt 14 an die MFZS 4. Das gefundene Zertifikat 13 wird vom MFZS 4 auf Vertrauenswürdigkeit geprüft, bevor es in den internen Speicher der MFZS 4 übernommen und an das anfragende SIM 2 gesendet wird. Die Folgeschritte 14 bis 18 entsprechen den Schritten der vorhergehenden Figuren.

### Bezugszeichenliste

1 Mobiles Endgerät
2 Sicherheitselement, SIM
2a Speicherbereich des Sicherheitselements
3 Mobilfunknetz
4 Mobilfunkzertifikatinstanz, MFZS
5 Internet
6 Weitere Zertifikatsinstanzen
7 Entfernte Empfängerinstanz, Empfänger
8 Verfassen einer elektronischen Textnachricht durch Benutzer
9 Auswählen der entfernten Instanz(en)
10 Übertragen der Textnachricht an SIM
11 Aufbau eines Kommunikationskanals von der SIM
12 Anfragen eines Zertifikats der entfernten Empfängerinstanz
13 Zertifikat der entfernten Instanz
14 Übertragen des angeforderten Zertifikats
15 Ablegen des angeforderten Zertifikats
16 Verschlüsseln der Textnachricht
17 Übertragen einer verschlüsselten Textnachricht
18 Bestätigung des Versands bzw. des Empfangs
19 Entschlüsseln der Textnachricht
20 Übertragen der entschlüsselten Textnachricht an mobiles Endgerät
21 Benachrichtigen über weitere Kosten bei Senden des Zertifikats
22 Besorgungsanforderung
23 Benachrichtigen über Ungültigkeit des Zertifikats

## Patentansprüche

1. Verfahren zum kryptografischen Verschlüsseln einer elektronischen Textnachricht in einem mobilen Endgerät (1), wobei die Textnachricht über ein Mobilfunknetz (3) an eine entfernte Empfängerinstanz (7) nach der Verschlüsselung gesendet wird, mit den Verfahrensschritten:
- Aufbauen (11) eines Kommunikationskanals über das Mobilfunknetz (3) zu einer Instanz (4) durch ein Sicherheitselement (2) im mobilen Endgerät (1);
**dadurch gekennzeichnet, dass**
die Instanz (4) eine Mobilfunkzertifikatinstanz (4) ist, und
- Empfangen (12) zumindest einer Teilmenge eines Zertifikats von der Mobilfunkzertifikatinstanz (4) über den aufgebauten Kommunikationskanal im Mobilfunknetz (3) durch das Sicherheitselement (2), wobei das Zertifikat reduziert wird damit die Teilmenge des Zertifikats eine Zuordnungsinformation der entfernten Empfängerinstanz (7) und einen öffentlichen Schlüsselteil eines asymmetrischen Schlüsselpaars der entfernten Empfängerinstanz (7) beinhaltet; und
- Verschlüsseln (16) der Textnachricht unter Verwendung der Teilmenge des empfangenen Zertifikats durch das mobile Endgerät (1) oder das Sicherheitselement (2).

2. Verfahren zum Entschlüsseln von gemäß Anspruch 1 verschlüsselten elektronischen Textnachricht, insbesondere einer E-Mail, durch ein mobiles Endgerät (1) oder ein Sicherheitselement (2) in dem mobilen Endgerät (1), wobei die verschlüsselte Textnachricht über ein Mobilfunknetz (3) von einer entfernte Empfängerinstanz (7) gesendet wurde, wobei der zum Entschlüsseln benötigte private Schlüssel des asymmetrischen Schlüsselpaars in einem Speicherbereich (2a) des Sicherheitselements (2) abgelegt ist.

3. Verfahren gemäß einem der Ansprüche 1 bis 2, wobei der aufgebaute Kommunikationskanal kryptografisch gesichert erfolgt und während des Aufbaus (11) eine gegenseitige Authentifizierung zwischen Sicherheitselement (2) und Mobilfunkzertifikatinstanz (4) stattfindet.

4. Verfahren gemäß einem der vorhergehenden Ansprüche, wobei das Aufbauen (11) des Kommunikationskanals im Sicherheitselement (2) mittels eines Smart Card Web Server erfolgt.

5. Verfahren gemäß einem der vorhergehenden Ansprüche, wobei vor dem Aufbau (11) des Kommunikationskanals ein Speicherbereich (2a) des Sicherheitselements (2) auf Vorhandensein des Zertifikats der entfernten Empfängerinstanz (7) überprüft wird und wobei bei Vorhandensein des Zertifikats zusätzlich geprüft wird, ob das Zertifikat gültig ist.

6. Verfahren gemäß einem der vorhergehenden Ansprüche, wobei das empfangene Zertifikat der Mobilfunkzertifikatinstanz (4) in einem Speicherbereich (2a) des Speicherelements (2) abgelegt (15) wird.

7. Verfahren gemäß einem der vorhergehenden Ansprüche, wobei das Sicherheitselement (2) als Proxy-Server in den Konfigurationseinstellungen des mobilen Endgeräts (1) ausgewählt wird und das Sicherheitselement (2) einen Mail-Client aufweist, welcher die verschlüsselte Textnachricht über ein Internet-Message-Access-Protocol an die entfernte Empfängerinstanz (7) versendet beziehungsweise die verschlüsselte Textnachricht vom mobilen Endgerät über ein Internet-Message-Access-Protocol von der entfernten Empfängerinstanz (7) empfängt.

8. Verfahren gemäß einem der vorhergehenden Ansprüche, wobei das empfangene Zertifikat nur eine vorbestimmte Zeitdauer gültig ist und das Sicherheitselement (2) eine OTA-Mitteilung (23) über die Ungültigkeit des Zertifikats empfängt.

9. Verfahren gemäß einem der vorhergehenden Ansprüche, wobei das Sicherheitselement (2):
- eine Trigger-SMS von der Mobilfunkzertifikatinstanz (4) als Benachrichtigung (23) über die Ungültigkeit eines zuvor empfangenen Zertifikats empfängt; und
- zum Ersetzen des ungültigen Zertifikats den Kommunikationskanal zur Mobilfunkzertifikatinstanz aufbaut (11).

10. Verfahren gemäß einem der vorhergehenden Ansprüche, wobei das Sicherheitselement (2) von der Mobilfunkzertifikatinstanz (4) eine Mitteilung bei Nichtvorhandensein des Zertifikats der entfernten Empfängerinstanz empfängt (21) und das Sicherheitselement (2) dem Benutzer des mobilen Endgeräts (1) diese Mitteilung weiterleitet.

11. Verfahren gemäß einem der vorhergehenden Ansprüche, mit
- Weiterleiten einer Zertifikatsanforderung (12) des Sicherheitselements (2) von der Mobilfunkzertifikatinstanz (4) an eine weitere Zertifikatinstanz (6), falls ein angefordertes Zertifikat nicht in der Mobilfunkzertifikatinstanz (4) verfügbar ist.

12. Verfahren nach Anspruch 11, wobei die Zertifikatsanforderung (14) erst weitergeleitet wird, nachdem die Mobilfunkzertifikatinstanz (4) das Sicherheitselement (2) informiert (21) und die Mobilfunkzertifikatinstanz (4) vom Sicherheitselement (2) eine Zertifikatsbesorgungsanforderung (22) empfangen hat.

13. Verfahren nach einem der Ansprüche 11 oder 12, wobei die Mobilfunkzertifikatinstanz (4) eine eindeutige Identifikationsnummer des Sicherheitselements (2) empfängt und die Mobilfunkzertifikatinstanz (4) das Senden des Zertifikats an das Sicherheitselement (2) protokolliert.

14. Verfahren nach einem der Ansprüche 11 bis 14, wobei die Mobilfunkzertifikatinstanz (4) die Gültigkeit bereits versendeter Zertifikate überwacht und eine Benachrichtigung (23) über die Ungültigkeit versendeter Zertifikate an das Sicherheitselement (2):
- direkt in Form einer OTA-Mitteilung,
- indirekt in Form einer Trigger-SMS und/oder
- direkt während des Versands eines anderen Zertifikats sendet.

15. Verfahren nach einem der vorhergehenden Ansprüche, wobei die Mobilfunkzertifikatinstanz (4) ein Push-Server ist.

## Claims

1. A method for cryptographically encrypting an electronic text message in a mobile terminal (1), wherein the text message is sent via a mobile communication network (3) to a remote receiver entity (7) after the encryption, having the method steps of:
- establishing (11) a communication channel via the mobile communication network (3) to an entity (4) by a security element (2) in the mobile terminal (1);
**characterized in that** the entity (4) is a mobile communication certificate entity (4), and
- receiving (12) at least a subset of a certificate from the mobile communication certificate entity (4) via the established communication channel in the mobile communication network (3) by the security element (2), wherein the certificate is reduced so that the subset of the certificate thus contains an allocation information item of the remote receiver entity (7) and a public key part of an asymmetric key pair of the remote receiver entity (7); and
- encrypting (16) the text message employing the subset of the received certificate by the mobile terminal (1) or the security element (2).

2. A method for decrypting an electronic text message, in particular an e-mail, encrypted according to claim 1 by a mobile terminal (1) or a security element (2) in the mobile terminal (1), wherein the encrypted text message was sent via a mobile communication network (3) by a remote receiver entity (7), wherein the private key of the asymmetric key pair required for decrypting is stored in a memory area (2a) of the security element (2).

3. The method according to any one of claims 1 to 2, wherein the established communication channel is effected in cryptographically secure manner and during the establishment (11) a mutual authentication takes place between the security element (2) and the mobile communication certificate entity (4).

4. The method according to any one of the preceding claims, wherein the establishment (11) of the communication channel in the security element (2) is effected by means of a smart card web server.

5. The method according to any one of the preceding claims, wherein prior to the establishment (11) of the communication channel, a memory area (2a) of the security element (2) is checked for the presence of the certificate of the remote receiver entity (7) and wherein, when the certificate is present, it is checked additionally whether the certificate is valid.

6. The method according to any one of the preceding claims, wherein the received certificate of the mobile communication certificate entity (4) is stored (15) in a memory area (2a) of the memory element (2).

7. The method according to any one of the preceding claims, wherein the security element (2) is chosen as a proxy server in the configuration settings of the mobile terminal (1) and the security element (2) has a mail client that sends the encrypted text message via an Internet message access protocol to the remote receiver entity (7) and/or that receives the encrypted text message of the mobile terminal via an Internet message access protocol from the remote receiver entity (7).

8. The method according to any one of the preceding claims, wherein the received certificate is valid only for a predetermined time period and the security element (2) receives an OTA message (23) about the invalidity of the certificate.

9. The method according to any one of the preceding claims, wherein the security element (2):
- receives a trigger SMS from the mobile communication certificate entity (4) as a notification (23) about the invalidity of a previously received certificate; and
- establishes (11) the communication channel to the mobile communication certificate entity for replacing the invalid certificate.

10. The method according to any one of the preceding claims, wherein the security element (2) receives (21) a notification from the mobile communication certificate entity (4) when the certificate of the remote receiver entity is not present, and the security element (2) forwards said notification to the user of the mobile terminal (1).

11. The method according to any one of the preceding claims, having
- forwarding a certificate request (12) of the security element (2) from the mobile communication certificate entity (4) to a further certificate entity (6), if a requested certificate is not available in the mobile communication certificate entity (4).

12. The method according to claim 11, wherein the certificate request (14) is forwarded only after the mobile communication certificate entity (4) has informed (21) the security element (2) and the mobile communication certificate entity (4) has received a certificate procurement request (22) from the security element (2).

13. The method according to any one of claims 11 or 12, wherein the mobile communication certificate entity (4) receives a unique identification number of the security element (2) and the mobile communication certificate entity (4) logs the sending of the certificate to the security element (2).

14. The method according to any one of claims 11 to 14, wherein the mobile communication certificate entity (4) monitors the validity of already sent certificates and sends a notification (23) about the invalidity of sent certificates to the security element (2):
- directly in the form of an OTA message,
- indirectly in the form of a trigger SMS and/or
- directly while sending a different certificate.

15. The method according to any one of the preceding claims, wherein the mobile communication certificate entity (4) is a push server.

## Revendications

1. Procédé de chiffrement cryptographique d'un message texte électronique dans un terminal (1) mobile, cependant que le message texte est envoyé par l'intermédiaire d'un réseau de radiophonie mobile (3) à une instance réceptrice (7) éloignée après le chiffrement, comprenant les étapes de procédé :
- établissement (11) d'un canal de communication par l'intermédiaire du réseau de radiophonie mobile (3), vers une instance (4), par un élément de sécurité (2) dans le terminal mobile (1) ;
**caractérisé en ce que**
l'instance (4) est instance de certification de radiophonie mobile (4), et
- réception (12) d'au moins une quantité partielle d'un certificat de l'instance de certification de radiophonie mobile (4) par l'intermédiaire du canal de communication établi dans le réseau de radiophonie mobile (3) par l'élément de sécurité (2), cependant que le certificat est réduit afin que la quantité partielle du certificat contienne une information d'affectation de l'instance réceptrice (7) éloignée et une partie de clé publique d'une paire de clés asymétrique de l'instance réceptrice (7) éloignée ; et
- chiffrement (16) du message texte en utilisant la quantité partielle du certificat reçu, par le terminal mobile (1) ou par l'élément de sécurité (2).

2. Procédé de déchiffrement de message texte électronique chiffré selon la revendication 1, en particulier d'un e-mail, par un terminal mobile (1) ou par un élément de sécurité (2) dans le terminal mobile (1), cependant que le message texte chiffré a été envoyé par l'intermédiaire d'un réseau de radiophonie mobile (3) par une instance réceptrice (7) éloignée, cependant que la clé privée, de la paire de clés asymétrique, requise pour le déchiffrement, est déposée dans une zone mémoire (2a) de l'élément de sécurité (2).

3. Procédé selon une des revendications de 1 à 2, cependant que le canal de communication établi est réalisé de manière cryptographiquement sécurisée, et que, pendant l'établissement (11), une authentification mutuelle a lieu entre l'élément de sécurité (2) et l'instance de certification de radiophonie mobile (4).

4. Procédé selon une des revendications précédentes, cependant que l'établissement (11) du canal de communication dans l'élément de sécurité (2) est réalisé au moyen d'un serveur web pour carte à puce.

5. Procédé selon une des revendications précédentes, cependant que, avant l'établissement (11) du canal de communication, une zone mémoire (2a) de l'élément de sécurité (2) est vérifiée pour discerner s'il y a le certificat de l'instance réceptrice (7) éloignée, et cependant que, s'il y a le certificat, il est en outre vérifié si le certificat est valide.

6. Procédé selon une des revendications précédentes, cependant que le certificat reçu de l'instance de certification de radiophonie mobile (4) est déposé (15) dans une zone mémoire (2a) de l'élément de mémoire (2).

7. Procédé selon une des revendications précédentes, cependant que l'élément de sécurité (2) est choisi comme serveur proxy dans les options de configuration du terminal (1) mobile, et que l'élément de sécurité (2) comporte un client de messagerie qui envoie le message texte chiffré, par l'intermédiaire d'un Internet Message Access Protocol, à l'instance réceptrice (7) éloignée, ou reçoit le message texte chiffré du terminal mobile par l'intermédiaire d'un Internet Message Access Protocol de la part de l'instance réceptrice (7) éloignée.

8. Procédé selon une des revendications précédentes, cependant que le certificat reçu n'est valide qu'une longueur de temps prédéterminée et que l'élément de sécurité (2) reçoit une communication OTA (23) concernant l'invalidité du certificat.

9. Procédé selon une des revendications précédentes, cependant que l'élément de sécurité (2) :
- reçoit un SMS de déclenchement de l'instance de certification de radiophonie mobile (4) en tant que notification (23) de l'invalidité d'un certificat auparavant reçu ; et
- établit (11), pour remplacer le certificat invalide, le canal de communication vers l'instance de certification de radiophonie mobile.

10. Procédé selon une des revendications précédentes, cependant que l'élément de sécurité (2) reçoit (21) de la part de l'instance de certification de radiophonie mobile (4) une communication, dans le cas où il n'y a pas le certificat de l'instance réceptrice éloignée, et que l'élément de sécurité (2) transfère à l'utilisateur du terminal (1) mobile cette communication.

11. Procédé selon une des revendications précédentes, comprenant
- transfert d'une demande de certificat (12) de l'élément de sécurité (2) de l'instance de certification de radiophonie mobile (4) à une autre instance de certification (6) dans le cas un certificat demandé n'est pas disponible dans l'instance de certification de radiophonie mobile (4).

12. Procédé selon la revendication 11, cependant que la demande de certificat (14) n'est transférée qu'après que l'instance de certification de radiophonie mobile (4) a informé (21) l'élément de sécurité (2) et que l'instance de certification de radiophonie mobile (4) a reçu de la part de l'élément de sécurité (2) une demande de fourniture de certificat (22).

13. Procédé selon une des revendications 11 ou 12, cependant que l'instance de certification de radiophonie mobile (4) reçoit un numéro d'identification univoque de l'élément de sécurité (2) et que l'instance de certification de radiophonie mobile (4) journalise l'envoi du certificat à l'élément de sécurité (2).

14. Procédé selon une des revendications de 11 à 14, cependant que l'instance de certification de radiophonie mobile (4) surveille la validité de certificats déjà envoyés et envoie une notification (23) de l'invalidité de certificats envoyés à l'élément de sécurité (2) :
- directement sous forme d'une communication OTA,
- indirectement sous forme d'un SMS de déclenchement, et/ou
- directement pendant l'expédition d'un autre certificat.

15. Procédé selon une des revendications précédentes, cependant que l'instance de certification de radiophonie mobile (4) est un serveur push.
